# EUROPEAN PATENT SPECIFICATION

(11) **EP 4 365 065 B1**
(45) Date of publication and mention of the grant of the patent: **21.10.2026**
(21) Application number: 22833497.5
(22) Date of filing: 22.06.2022
(51) Int. Cl.: B62D 25/02, B62D 21/15, B62D 27/02

(54) **SIDE SILL FOR VEHICLE**
SCHWELLER FÜR FAHRZEUG
LONGERON LATÉRAL POUR VÉHICULE

(30) Priority: 28.06.2021 KR 20210083670
(43) Date of publication of application: 08.05.2024
(73) Proprietor: POSCO Co., Ltd, Pohang-si, Gyeongsangbuk-do 37859 (KR)
(72) Inventor: LEE, Gyu-Min, Incheon 21985 (KR)
(74) Representative: Meissner Bolte Partnerschaft mbB
(86) International application number: PCT/KR2022/008866
(87) International publication number: WO 2023/277441

(56) References cited:
- WO-A1-2023/277440
- DE-A1- 102018 132 258
- JP-B2- 5 516 361
- JP-B2- 5 962 627
- KR-A- 20100 061 288
- KR-B1- 0 142 928
- KR-Y1- 200 238 035
- US-A1- 20240 294 210

## Description

### Technical Field

The present disclosure relates to a side sill for a vehicle.

### Background Art

A side sill for a vehicle serves to protect passengers by absorbing collision energy in the event of a side collision.

A side sill applied to eco-friendly vehicles such as electric vehicles serves to protect not only passengers but also batteries disposed on a floor. Because the battery has a relatively large volume as compared to other components of the vehicle, a side space of a vehicle equipped with the battery is relatively narrow as compared to a vehicle equipped with an internal combustion engine.

Accordingly, the side sill applied to the eco-friendly vehicles needs to be capable of absorbing maximum collision energy in a narrow space, and needs to have a minimum weight in order to improve energy efficiency of eco-friendly vehicles.

To this end, aluminum extrusion materials have been applied to the side sills of the eco-friendly vehicles, but it is still desired to improve the ability to absorb collision energy and achieve weight reduction.

(Patent Document 1) KR 20-1998-0043143U (September 25, 1998)

DE 10 2018 132258 A1 describes a side sill arrangement according to the preamble of claim 1.

### Summary of Invention

### Technical Problem

An aspect of the present disclosure is to improve collision energy absorption efficiency of a side sill and achieve lightweightedness thereof.

An aspect of the present disclosure is to increase the rigidity of a side sill and reduce manufacturing costs. Solution to Problem

According to the claimed invention, a side sill for a vehicle includes: a side sill frame formed to have a hollow portion; a first reinforcing frame disposed in the hollow portion and attached to the side sill frame; a second reinforcing frame disposed in the hollow portion and attached to the first reinforcing frame and the side sill frame, wherein the first reinforcing frame and the second reinforcing frame may be disposed in the hollow portion so as to form a closed cross-section in the hollow portion from a thickness-wise cross-section of the side sill frame.

Additionally, at least one of the side sill frame, the first reinforcing frame, and the second reinforcing frame may be formed of steel.

Additionally, the first reinforcing frame and the second reinforcing frame include a concave-convex portion in a longitudinal cross-sectional shape of the side sill frame.

Additionally, the first reinforcing frame and the second reinforcing frame may overlap each other in the hollow portion.

Additionally, in the concave-convex portion, a convex portion and a concave portion may be formed continuously in a longitudinal direction of the side sill frame.

Additionally, the convex portion of the first reinforcing frame may overlap the convex portion of the second reinforcing frame, and the concave portion of the first reinforcing frame may overlap the concave portion of the second reinforcing frame.

Additionally, the side sill frame may include: a first side sill frame to which the first reinforcing frame is attached; and a second side sill frame attached to the first side sill frame and having an internal surface to which the second reinforcing frame is attached.

Additionally, a shape of a thickness-wise cross-section of the first reinforcing frame may include: a plurality of first lower flange portions formed by bending both ends and attached to an internal surface of the first side sill frame; a plurality of first extension portions connected to the plurality of first lower flange portions, respectively, and extending in a direction of the second reinforcing frame; and a first upper flange portion connected to the plurality of first extension portions.

Additionally, a shape of a thickness-wise cross-section of the second reinforcing frame may include: a plurality of second extension portions attached to the first extension portion and extending in a direction of the second side sill frame; and a second upper flange portion connected to the second extension portion and attached to an internal surface of the second side sill frame.

Additionally, the second upper flange portion may be planar.

Additionally, in a shape of the thickness-wise cross section of the second reinforcing frame, the second extension portion may have a step portion.

Additionally, in a width between the plurality of second extension portions in the thickness-wise cross-section of the second reinforcing frame, a width from an end of the second extension portion on one side to an end of the second extension portion on the other side is the widest.

Additionally, the end of the second extension portion may exist on the first extension portion.

Additionally, the first lower flange portion may be attached to the first side sill frame by welding, the second extension portion may be attached to the first extension portion by the welding, and the second upper flange portion may be attached to the second side sill frame with an adhesive.

### Advantageous Effects of Invention

According to an aspect of the present disclosure, collision energy absorption efficiency of a side sill may be improved, and a weight of the side sill may be reduced.

According to an aspect of the present disclosure, the rigidity of a side sill may be increased, and manufacturing costs may be reduced.

### Brief Description of Drawings

FIG. 1 is a perspective view of a side sill for a vehicle according to an example embodiment of the present disclosure.
FIG. 2 is a front cross-sectional view of FIG. 1.
FIG. 3 is a cross-sectional view taken along line A-A' of FIG. 1.
FIG. 4 is a cross-sectional view taken along line B-B' of FIG. 1.
FIG. 5 is a perspective view of a side sill for a vehicle according to an example embodiment of the present disclosure.
FIG. 6 is a cross-sectional view taken along line C-C' of FIG. 5.
FIG. 7 is a cross-sectional view of a first reinforcing frame according to an example embodiment of the present disclosure.
FIG. 8 is a cross-sectional view of a second reinforcing frame according to an example embodiment of the present disclosure.
FIG. 9 is a deformation analysis result of a side sill for a vehicle according to an example embodiment of the present disclosure.
FIG. 10 is a deformation analysis result of a side sill for a vehicle according to an example embodiment of the present disclosure.
FIG. 11 is a cross-sectional view of a conventional side sill for a vehicle.
FIG. 12 is a graph of load-displacement curves of a side sill for a vehicle of FIG. 1 and a side sill for a vehicle of FIG. 11.

### Best Mode for Invention

In order to assist in understanding the description of example embodiment of the present disclosure, the elements described with the same reference numerals in the accompanying drawings are the same elements, and related components among the components performing the same action in each example embodiment are indicated by numbers on the same or an extended line.

Furthermore, in order to clarify the present disclosure, descriptions of elements and technologies well known by the related art are omitted, and the present disclosure will be described in detail below with reference to the accompanying drawings.

However, the concept of the present disclosure is not limited to the example embodiment presented below, and those skilled in the art may propose other embodiments as long as they are included within the scope of the invention as defined in the appended claims.

Hereinafter, an X-axis illustrated in the accompanying drawings is a width direction of the side sill, a Y-axis is a length direction of the side sill, and a Z-axis is a height direction of the side sill.

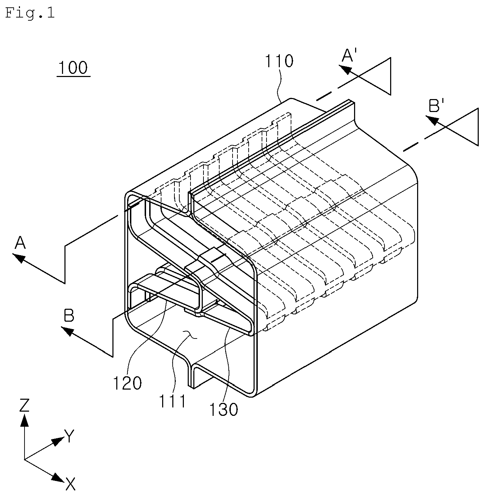

As illustrated in FIG. 1, a side sill for a vehicle 100 according to an example embodiment of the present disclosure may include a side sill frame 110 having a hollow portion 111, a first reinforcing frame 120 disposed in the hollow portion 111, and a second reinforcing frame 130 disposed in the hollow portion 111.

The first reinforcing frame 120 may be attached to the side sill frame 110 and fixed to the hollow portion 111.

The second reinforcing frame 130 may be attached to the first reinforcing frame 120 and the side sill frame 110 and fixed to the hollow portion 111.

The first reinforcing frame 120 and the second reinforcing frame 130 may form a closed cross-section in the hollow portion 111 in a thickness-wise cross-section of the side sill frame.

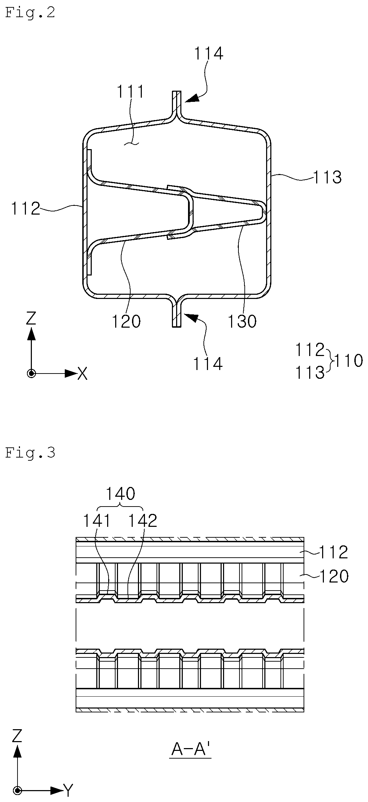

As illustrated in FIG. 2, the side sill frame 110 may include a first side sill frame 112 attached to the first reinforcing frame 120 and a second side sill frame 113 attached to the first side sill frame 112 so as to form an attachment portion with the first side sill frame 112.

According to an example embodiment of the present disclosure, at least one of the first side sill frame 112, the second side sill frame 113, the first reinforcing frame 120, and the second reinforcing frame 130 may be formed of steel. Accordingly, a mechanical strength of the side sill for a vehicle may be improved.

The second reinforcing frame 130 may be attached to an internal surface of the second side sill frame 113.

The first reinforcing frame 120 and the second reinforcing frame 130 may be attached to the first side sill frame 112 and the second side sill frame 113 so as to be disposed in parallel with the X-axis, respectively.

An internal surface of the second reinforcing frame 130 may be attached to an external surface of the first reinforcing frame 120. Accordingly, the first reinforcing frame 120 and the second reinforcing frame 130 may overlap each other in the hollow portion.

By such an attachment, the hollow portion may be a closed cross-section. Accordingly, when an impact is applied in an X-axis direction, a capacity to absorb collision energy may be improved.

Furthermore, the first side sill frame 112, the second side sill frame 113, the first reinforcing frame 120, and the second reinforcing frame 130 in the present disclosure may further improve the capacity to absorb collision energy than the first side sill frame 112, the second side sill frame 113, the first reinforcing frame 120, and the second reinforcing frame 130, formed of aluminum of the same weight.

Accordingly, as compared to the side sill for a vehicle made of aluminum, an increase in a load of an entire vehicle may be prevented, and a side sill for a vehicle with more improved collision energy absorption capacity than the side sill for a vehicle formed of aluminum may be implemented at the same time.

In an example embodiment of the present disclosure, the first reinforcing frame 120 and the second reinforcing frame 130 may be formed of a material including ultra-high strength steel with a tensile strength of 980 MPa or higher.

In an example embodiment of the present disclosure, the first reinforcing frame 120 and the second reinforcing frame 130 may be formed of a material including 1180 TRIP steel.

In an example embodiment of the present disclosure, the first side sill frame 112 and the second side sill frame 113 may be formed of a material including 1470 MART steel.

However, the material is not necessarily limited by the present disclosure, and may be appropriately changed and applied within the scope of the steel material.

At least one of the first side sill frame 112, the second side sill frame 113, the first reinforcing frame 120, and the second reinforcing frame 130 may be molded by foam forming or crash forming a steel plate. This may contribute to reducing manufacturing costs through reduction of molding costs.

When the first side sill frame 112, the second side sill frame 113, the first reinforcing frame 120, and the second reinforcing frame 130 are disposed as illustrated in FIG. 2 and coupled to each other, a closed cross section in a direction in parallel with the X-axis may be easily formed. Accordingly, assembly and production efficiency of the side sill for a vehicle may be improved.

Furthermore, by configuring the cross-section of the vehicle side sill as illustrated in FIG. 2, when the side sill for a vehicle receives an impact from a side surface thereof, that is, in the X-axis direction, the side sill for a vehicle may be uniformly deformed in the Z-axis direction.

Accordingly, the first reinforcing frame 120 and the second reinforcing frame 130 may be prevented from showing uneven deformation behavior in the Z-axis direction, and may be normally compressed and deformed in the X-axis direction.

As described above, when the vehicle side sill is formed of steel, a collision energy absorption capacity thereof may be at least equal to or greater than a collision energy absorption capacity of the vehicle side sill formed of aluminum of the same weight. Accordingly, as compared to when the side sill is formed of aluminum, the side sill formed of steel may improve the collision energy absorption efficiency to equal or higher levels while lightening the side sill.

As illustrated in FIG. 3, the first reinforcing frame 120 according to an example embodiment of the present disclosure may be provided such that the cross-sectional shape in the Y-axis direction includes a concave-convex portion 140.

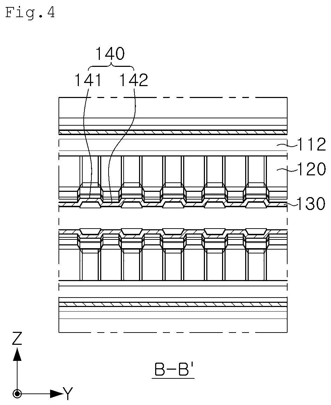

Furthermore, as illustrated in FIG. 4, the second reinforcing frame 130 according to an example embodiment of the present disclosure may be provided such that the cross-sectional shape in the Y-axis direction includes a concave-convex portion 140.

The concave-convex portion 140 may be formed by continuing a convex portion 141 and a concave portion 142 in the Y-axis direction. The convex portion 141 and the concave 142 may be continuously provided during a predetermined section in the Y-axis direction.

According to the concave-convex portion 140 of the first reinforcing frame 120 and the second reinforcing frame 130, rigidity may be increased without increasing a weight of the first reinforcing frame 120 and the second reinforcing frame 130.

Lengths of the convex portion 141 and the concave portion 142 in the Y-axis direction and lengths thereof in the Z-axis direction are not necessarily limited by the present disclosure, and may be determined in consideration of at least one of the type and thickness of the steel applied to the first reinforcing frame 120 and the second reinforcing frame 130, and may be determined in consideration of at least one of at least one element among the type and thickness of a steel material applied to the first reinforcing frame 120 and the second reinforcing frame 130, and may be determined by the specifications required as a side sill for a vehicle.

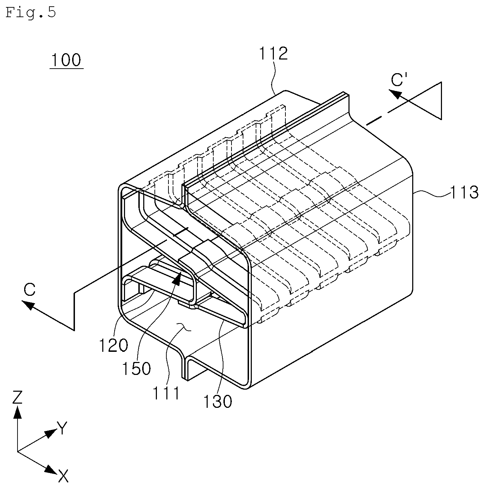

As illustrated in FIG. 5, the first reinforcing frame 120 and the second reinforcing frame 130 may overlap each other in the hollow portion. A region in which the first reinforcing frame 120 and the second reinforcing frame 130 overlap each other may be an overlapping portion 150. The overlapping portion 150 may be continuous in the Y-axis direction.

According to the overlapping portion 150, a separate coupling member for assembling the first reinforcing frame 120 and the second reinforcing frame 130 within the hollow portion 111 becomes unnecessary, and a degree of design freedom may be improved.

Furthermore, since a separate coupling member is not required, this may contribute to a weight reduction of the side sill for a vehicle.

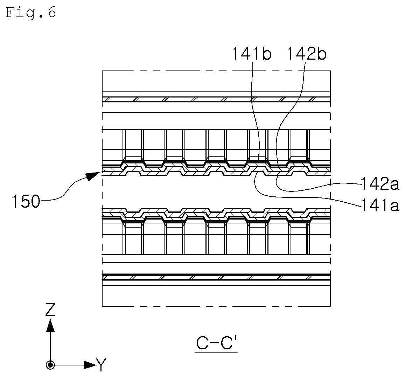

As illustrated in FIG. 6, in an example embodiment of the present disclosure, a first convex portion 141a formed in the first reinforcing frame 120 may overlap a second convex portion 141b formed in the second reinforcing frame 130, and a first concave portion 142a formed in the first reinforcing frame 120 may overlap a second concave portion 142b formed in the second reinforcing frame 130.

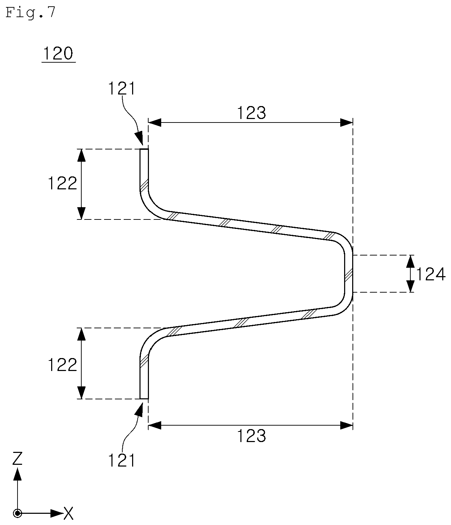

Meanwhile, FIG. 7 illustrates a first reinforcing frame 120 according to an example embodiment of the present disclosure. The first reinforcing frame 120 may be formed by bending and molding a single steel plate. By bending and molding the single steel plate, a mechanical strength of the first reinforcing frame 120 may be further improved.

A shape of a thickness-wise cross-section of the first reinforcing frame 120 may include a plurality of first lower flange portion 122 formed by bending both ends 121 and attached to an internal surface of the first side sill frame 112 (see FIG. 5), a plurality of first extension portions 123 connected to the plurality of first lower flange portions 122 and extending in a direction of the second reinforcing frame 130 (see FIG. 5), respectively, and the first upper flange portion 124 connected to the plurality of first extension portions 123.

The first reinforcing frame 120 may be bent and molded such that the first extension portion 123 and the first lower flange portion 122 may be disposed to cross each other.

The first lower flange portion 122 may be attached to the internal surface of the first side sill frame 112 (see FIG. 5) by welding.

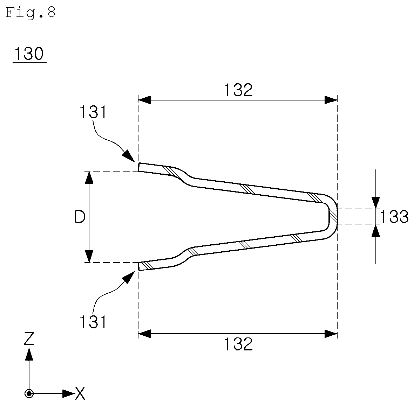

FIG. 8 illustrates a second reinforcing frame 130 according to an example embodiment of the present disclosure. The second reinforcing frame 130 may be formed by bending and molding the single steel plate. By bending and molding the single steel plate, the mechanical strength of the second reinforcing frame 130 may be further improved.

The second reinforcing frame 130 may be molded such that a shape of a thickness-wise cross-section thereof has a shape in which both ends 131 face each other in the Z-axis direction. Furthermore, the second reinforcing frame 130 may include a plurality of second extension portions 132 extending in a direction of the second side sill frame 113 (see FIG. 5), and may include a second upper flange portion 133 connected to the plurality of second extension portions 132 and attached to the internal surface of the second side sill frame 113 (see FIG. 5).

In an example embodiment of the present disclosure, the second upper flange portion 133 may be planar. Accordingly, when an adhesive for adhesion to the second side sill frame 113 (see FIG. 5) is applied to the second upper flange portion 133, adhesion force of the second upper flange portion 133 may be improved, and the convenience of adhesion and assembly may be improved.

The second extension portion 132 may be attached to the first extension portion 123 (see FIG. 7). Furthermore, the end 131 of the second reinforcing frame 130 may exist on the first extension portion 123 (see FIG. 7).

In an example embodiment of the present disclosure, the second extension portion 132 may be attached to the first extension portion 123 (see FIG. 7) by welding.

Furthermore, in an example embodiment of the present disclosure, the second extension portion 132 may be provided to have a step portion in the X-axis direction. Furthermore, in a width between the plurality of second extension portions, a width D from one end to the other end may be the widest. Accordingly, the second reinforcing frame 130 may more easily overlap the first reinforcing frame 120, and the convenience of assembly may be improved.

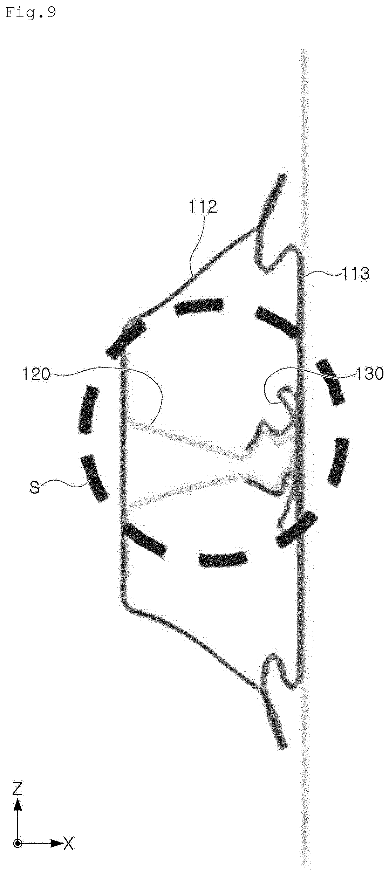

FIG. 9 illustrates a deformation analysis result at the beginning of a collision in a collision test of a side sill for a vehicle according to an example embodiment of the present disclosure. An impact is applied from the first side sill frame 112 to the second side sill frame 113.

Referring to FIG. 9, it may be seen that the first side sill frame 112 and the second side sill frame 113 are compressed in the X-axis direction and are stretched and deformed in the Z-axis direction, and the first reinforcing frame 120 and the second reinforcing frame 130 are also compressed in the X-axis direction.

In this case, it may be seen that a deformation of the first reinforcing frame 120 and the second reinforcing frame 130 is not title to one side, but the deformation thereof is uniformed distributed in the Z-axis direction.

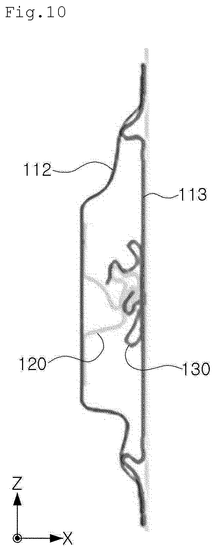

FIG. 10 illustrates a deformation analysis result after the collision. It may be confirmed that the first side sill frame 112 and the second side sill frame 113 are further compressed in the X-axis direction and are further stretched and deformed in the Z-axis direction.

In this case, it may be seen that a deformation of the first reinforcing frame 120 and the second reinforcing frame 130 is still uniformly distributed in the Z-axis direction.

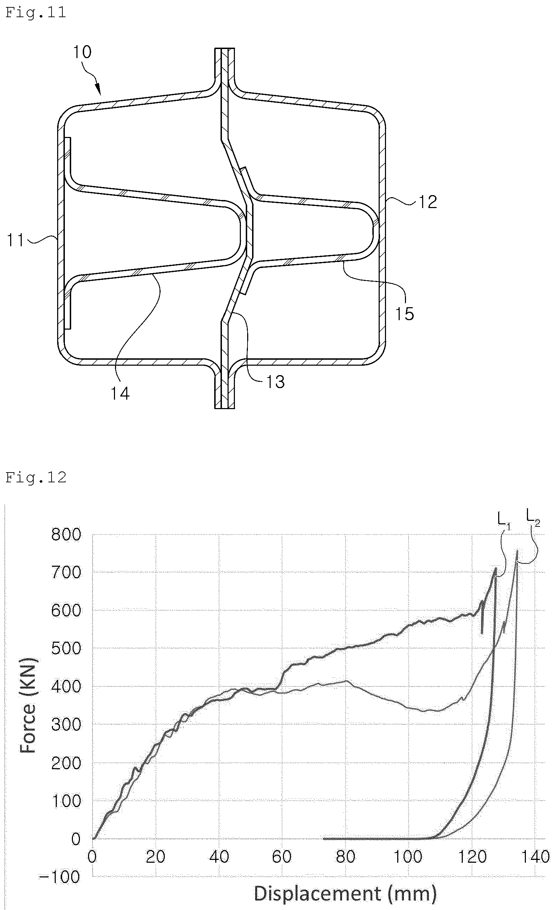

FIG. 11 illustrates a cross-section of an existing side sill for a vehicle 10. The existing side sill for a vehicle may include a plurality of side sill frames 11 and 12 and reinforcing members 13, 14 and 15 provided inside the side sill frames 11 and 12.

FIG. 12 illustrates a graph of load-displacement curves of the existing side sill for a vehicle 10 and the side sill for a vehicle 100 in FIG. 1 according to an example embodiment of the present disclosure. In FIG. 12, a load-displacement value of the side sill for a vehicle 100 (see FIG. 1) illustrated in FIG. 1 is expressed as a first value L₁, and a load-displacement value of the side sill for a vehicle 10 (see FIG. 11) illustrated in FIG. 11 is expressed as a second value L₂.

Referring to the first value L₁ and the second value L₂, it may be seen that the side sill for a vehicle 100 (see FIG. 1) illustrated in FIG. 1 has a relatively small displacement at the same load, as compared to the side sill for a vehicle 10 (see FIG. 11) illustrated in FIG. 11.

Furthermore, in the case of the second value L₂, an impact absorption capacity rapidly decreases at a displacement of 60 mm or more corresponding to a late stage of the collision.

In the case of the existing side sill for a vehicle 10 illustrated in FIG. 11, the first reinforcing member 14 and the second reinforcing member 13 are attached to each other. Accordingly, when the collision occurs, as the second reinforcing member 13 is deformed, the first reinforcing member 14 does not form a stable crushing behavior independently and is deformed together. For this reason, in the case of the second value L₂, the impact absorption capacity rapidly decreases at the displacement of 60 mm or more corresponding to the late stage of the collision.

On the other hand, in the case of the first value L₁, it may be seen that an impact is stably absorbed even after the collision.

In the case of the side sill for a vehicle 100 illustrated in FIG. 1, as illustrated in FIGS. 9 and 10, when the collision occurs, deformation characteristics of the first reinforcing frame 120 show stable crushing behavior, and accordingly, it may be seen that the impact absorption capacity remains stable to some extent even at a displacement of 60mm or more corresponding to the late stage of the collision.

The aforementioned description is provided for an example embodiment of the present disclosure, and it will be apparent to those skilled in the art that the scope of the present disclosure is not limited thereto, and various modifications and variations may be made within the scope of the invention as defined in the appended claims.

### DESCRIPTION OF REFERENCE CHARACTERS

110: SIDE SILL FRAME 111: HOLLOW PORTION
112: FIRST SIDE SILL FRAME 120: SECOND SIDE SILL FRAME
120: FIRST REINFORCING FRAME 122: FIRST LOWER FLANGE PORTION
123: FIRST EXTENSION PORTION 124: FIRST UPPER FLANGE PORTION
130: SECOND REINFORCING FRAME 132: SECOND EXTENSION PORTION
133: SECOND UPPER FLANGE PORTION 140: CONCAVE-CONVEX PORTION
141: CONVEX PORTION 142: CONCAVE PORTION
150: OVERLAPPING PORTION

## Claims

1. A side sill for a vehicle comprising: a side sill frame (110) formed to have a hollow portion (111); a first reinforcing frame (120) disposed in the hollow portion and attached to the side sill frame; a second reinforcing frame (130) disposed in the hollow portion and attached to the first reinforcing frame and the side sill frame, wherein the first reinforcing frame and the second reinforcing frame are disposed in the hollow portion so as to form a closed cross-section in the hollow portion from a thickness-wise cross-section of the side sill frame,
**characterised in that** the first reinforcing frame and the second reinforcing frame include a concave-convex portion (140) in a longitudinal cross-sectional shape of the side sill frame.

2. The side sill for a vehicle of claim 1, wherein at least one of the side sill frame (110), the first reinforcing frame (120), and the second reinforcing frame (130) is formed of steel.

3. The side sill for a vehicle of claim 1, wherein the first reinforcing frame (120) and the second reinforcing frame (130) overlap each other in the hollow portion (111).

4. The side sill for a vehicle of claim 3, wherein in the concave-convex portion (140), a convex portion (141) and a concave portion (142) are formed continuously in a longitudinal direction of the side sill frame.

5. The side sill for a vehicle of claim 4, wherein the convex portion (141) of the first reinforcing frame (120) overlaps the convex portion of the second reinforcing frame (130), and the concave portion (142) of the first reinforcing frame overlaps the concave portion of the second reinforcing frame.

6. The side sill for a vehicle of any one of claims 1 to 5, wherein the side sill frame (110) comprises: a first side sill frame (112) to which the first reinforcing frame (120) is attached; and a second side sill frame (113) attached to the first side sill frame and having an internal surface to which the second reinforcing frame (130) is attached.

7. The side sill for a vehicle of claim 6, wherein a shape of a thickness-wise cross-section of the first reinforcing frame (120) comprises:
a plurality of first lower flange portions (122) formed by bending both ends and attached to an internal surface of the first side sill frame (112);
a plurality of first extension portions (123) connected to the plurality of first lower flange portions, respectively, and extending in a direction of the second reinforcing frame (130); and
a first upper flange portion (124) connected to the plurality of first extension portions.

8. The side sill for a vehicle of claim 7, wherein a shape of a thickness-wise cross-section of the second reinforcing frame (130) comprises:
a plurality of second extension portions (132) attached to the first extension portion (123) and extending in a direction of the second side sill frame (113); and
a second upper flange portion (133) connected to the second extension portion and attached to an internal surface of the second side sill frame.

9. The side sill for a vehicle of claim 8, wherein the second upper flange portion (133) is planar.

10. The side sill for a vehicle of claim8, wherein in a shape of the thickness-wise cross section of the second reinforcing frame (130), the second extension portion (132) has a step portion.

11. The side sill for a vehicle of claim 10, wherein in a width between the plurality of second extension portions (132) in the thickness-wise cross-section of the second reinforcing frame (130), a width from an end of the second extension portion on one side to an end of the second extension portion on the other side is the widest.

12. The side sill for a vehicle of claim 11, wherein the end of the second extension portion (132) exists on the first extension portion (123).

13. The side sill for a vehicle of any one of claims 8 to 12, wherein the first lower flange portion (122) is attached to the first side sill frame (112) by welding,
the second extension portion (132) is attached to the first extension portion (123) by the welding, and
the second upper flange portion (133) is attached to the second side sill frame (113) with an adhesive.

## Patentansprüche

1. Schweller für ein Fahrzeug, umfassend: einen Schwellerrahmen (110), der dazu gebildet ist, einen hohlen Abschnitt (111) aufzuweisen; einen ersten Verstärkungsrahmen (120), der in dem hohlen Abschnitt angeordnet und an dem Schwellerrahmen befestigt ist; einen zweiten Verstärkungsrahmen (130), der in dem hohlen Abschnitt angeordnet und an dem ersten Verstärkungsrahmen und dem Schwellerrahmen befestigt ist, wobei der erste Verstärkungsrahmen und der zweite Verstärkungsrahmen in dem hohlen Abschnitt angeordnet sind, um einen geschlossenen Querschnitt in dem hohlen Abschnitt aus einem dickenweisen Querschnitt des Schwellerrahmens zu bilden,
**dadurch gekennzeichnet, dass** der erste Verstärkungsrahmen und der zweite Verstärkungsrahmen einen konkav-konvexen Abschnitt (140) in einer Längsquerschnittsform des Schwellerrahmens beinhalten.

2. Schweller für ein Fahrzeug nach Anspruch 1, wobei mindestens einer des Schwellerrahmens (110), des ersten Verstärkungsrahmens (120) und des zweiten Verstärkungsrahmens (130) aus Stahl gebildet ist.

3. Schweller für ein Fahrzeug nach Anspruch 1, wobei der erste Verstärkungsrahmen (120) und der zweite Verstärkungsrahmen (130) einander in dem hohlen Abschnitt (111) überlappen.

4. Schweller für ein Fahrzeug nach Anspruch 3, wobei in dem konkav-konvexen Abschnitt (140) ein konvexer Abschnitt (141) und ein konkaver Abschnitt (142) kontinuierlich in einer Längsrichtung des Schwellerrahmens gebildet sind.

5. Schweller für ein Fahrzeug nach Anspruch 4, wobei der konvexe Abschnitt (141) des ersten Verstärkungsrahmens (120) den konvexen Abschnitt des zweiten Verstärkungsrahmens (130) überlappt und der konkave Abschnitt (142) des ersten Verstärkungsrahmens den konkaven Abschnitt des zweiten Verstärkungsrahmens überlappt.

6. Schweller für ein Fahrzeug nach einem der Ansprüche 1 bis 5, wobei der Schwellerrahmen (110) Folgendes umfasst: einen ersten Schwellerrahmen (112), an dem der erste Verstärkungsrahmen (120) befestigt ist; und einen zweiten Schwellerrahmen (113), der an dem ersten Schwellerrahmen befestigt ist und eine innere Oberfläche aufweist, an welcher der zweite Verstärkungsrahmen (130) befestigt ist.

7. Schweller für ein Fahrzeug nach Anspruch 6, wobei eine Form eines dickenweisen Querschnitts des ersten Verstärkungsrahmens (120) Folgendes umfasst:
eine Vielzahl erster unterer Flanschabschnitte (122), die durch Biegen beider Enden gebildet und an einer inneren Oberfläche des ersten Schwellerrahmens (112) befestigt ist;
eine Vielzahl erster Erstreckungsabschnitte (123), die jeweils mit der Vielzahl erster unterer Flanschabschnitte verbunden ist und sich in einer Richtung des zweiten Verstärkungsrahmens (130) erstreckt; und
einen ersten oberen Flanschabschnitt (124), der mit der Vielzahl erster Erstreckungsabschnitte verbunden ist.

8. Schweller für ein Fahrzeug nach Anspruch 7, wobei eine Form eines dickenweisen Querschnitts des zweiten Verstärkungsrahmens (130) Folgendes umfasst:
eine Vielzahl zweiter Erstreckungsabschnitte (132), die an dem ersten Erstreckungsabschnitt (123) befestigt ist und sich in einer Richtung des zweiten Schwellerrahmens (113) erstreckt; und
einen zweiten oberen Flanschabschnitt (133), der mit dem zweiten Erstreckungsabschnitt verbunden und an einer inneren Oberfläche des zweiten Schwellerrahmens befestigt ist.

9. Schweller für ein Fahrzeug nach Anspruch 8, wobei der zweite obere Flanschabschnitt (133) planar ist.

10. Schweller für ein Fahrzeug nach Anspruch 8, wobei in einer Form des dickenweisen Querschnitts des zweiten Verstärkungsrahmens (130) der zweite Erstreckungsabschnitt (132) einen Stufenabschnitt aufweist.

11. Schweller für ein Fahrzeug nach Anspruch 10, wobei in einer Breite zwischen der Vielzahl zweiter Erstreckungsabschnitte (132) in dem dickenweisen Querschnitt des zweiten Verstärkungsrahmens (130) eine Breite von einem Ende des zweiten Erstreckungsabschnitts auf einer Seite zu einem Ende des zweiten Erstreckungsabschnitts auf der anderen Seite die breiteste ist.

12. Schweller für ein Fahrzeug nach Anspruch 11, wobei das Ende des zweiten Erstreckungsabschnitts (132) auf dem ersten Erstreckungsabschnitt (123) existiert.

13. Schweller für ein Fahrzeug nach einem der Ansprüche 8 bis 12, wobei der erste untere Flanschabschnitt (122) durch Schweißen an dem ersten Schwellerrahmen (112) befestigt ist,
der zweite Erstreckungsabschnitt (132) durch das Schweißen an dem ersten Erstreckungsabschnitt (123) befestigt ist und
der zweite obere Flanschabschnitt (133) mit einem Klebstoff an dem zweiten Schwellerrahmen (113) befestigt ist.

## Revendications

1. Bas de caisse pour un véhicule, comprenant : une structure de bas de caisse (110) formée de manière à comporter une portion creuse (111) ; une première structure de renfort (120) disposée dans la portion creuse et fixée à la structure de bas de caisse ; une deuxième structure de renfort (130) disposée dans la portion creuse et fixée à la première structure de renfort et à la structure de bas de caisse, dans lequel la première structure de renfort et la deuxième structure de renfort sont disposées dans la portion creuse de manière à former une section transversale fermée dans la portion creuse à partir d'une section transversale dans le sens de l'épaisseur de la structure de bas de caisse,
**caractérisé en ce que** la première structure de renfort et la deuxième structure de renfort incluent une portion concave-convexe (140) selon une forme de section transversale longitudinale de la structure de bas de caisse.

2. Bas de caisse pour un véhicule selon la revendication 1, dans lequel au moins l'une parmi la structure de bas de caisse (110), la première structure de renfort (120) et la deuxième structure de renfort (130) est formée d'acier.

3. Bas de caisse pour un véhicule selon la revendication 1, dans lequel la première structure de renfort (120) et la deuxième structure de renfort (130) se chevauchent dans la portion creuse (111).

4. Bas de caisse pour un véhicule selon la revendication 3, dans lequel, dans la portion concave-convexe (140), une portion convexe (141) et une portion concave (142) sont formées de manière continue dans une direction longitudinale de la structure de bas de caisse.

5. Bas de caisse pour un véhicule selon la revendication 4, dans lequel la portion convexe (141) de la première structure de renfort (120) chevauche la portion convexe de la deuxième structure de renfort (130), et la portion concave (142) de la première structure de renfort chevauche la portion concave de la deuxième structure de renfort.

6. Bas de caisse pour un véhicule selon l'une quelconque des revendications 1 à 5, dans lequel la structure de bas de caisse (110) comprend : une première structure de bas de caisse (112) à laquelle est fixée la première structure de renfort (120) ; et une deuxième structure de bas de caisse (113) fixée à la première structure de bas de caisse et présentant une surface interne à laquelle est fixée la deuxième structure de renfort (130).

7. Bas de caisse pour un véhicule selon la revendication 6, dans lequel la forme d'une section transversale dans le sens de l'épaisseur de la première structure de renfort (120) comprend :
une pluralité de premières portions de bride inférieures (122) formées par cintrage des deux extrémités et fixées à une surface interne de la première structure de bas de caisse (112) ;
une pluralité de premières portions d'extension (123) reliées respectivement à la pluralité de premières portions de bride inférieures et s'étendant dans une direction de la deuxième structure de renfort (130) ; et
une première portion de bride supérieure (124) reliée à la pluralité de premières portions d'extension.

8. Bas de caisse pour un véhicule selon la revendication 7, dans lequel la forme d'une section transversale dans le sens de l'épaisseur de la deuxième structure de renfort (130) comprend :
une pluralité de deuxièmes portions d'extension (132) fixées à la première portion d'extension (123) et s'étendant dans une direction de la deuxième structure de bas de caisse (113) ; et
une deuxième portion de bride supérieure (133) reliée à la deuxième portion d'extension et fixée à une surface interne de la deuxième structure de bas de caisse.

9. Bas de caisse pour un véhicule selon la revendication 8, dans lequel la deuxième portion de bride supérieure (133) est plane.

10. Bas de caisse pour un véhicule selon la revendication 8, dans lequel, dans une forme de la section transversale dans le sens de l'épaisseur de la deuxième structure de renfort (130), la deuxième portion d'extension (132) comporte une portion en gradin.

11. Bas de caisse pour un véhicule selon la revendication 10, dans lequel, dans une largeur entre la pluralité de deuxièmes portions d'extension (132) dans la section transversale dans le sens de l'épaisseur de la deuxième structure de renfort (130), une largeur allant d'une extrémité de la deuxième portion d'extension d'un côté à une extrémité de la deuxième portion d'extension de l'autre côté est la plus grande.

12. Bas de caisse pour un véhicule selon la revendication 11, dans lequel l'extrémité de la deuxième portion d'extension (132) existe sur la première portion d'extension (123).

13. Bas de caisse pour un véhicule selon l'une quelconque des revendications 8 à 12, dans lequel la première portion de bride inférieure (122) est fixée à la première structure de bas de caisse (112) par soudage,
la deuxième portion d'extension (132) est fixée à la première portion d'extension (123) par soudage, et
la deuxième portion de bride supérieure (133) est fixée à la deuxième structure de bas de caisse (113) à l'aide d'un adhésif.
